# EUROPÄISCHE PATENTANMELDUNG

(11) **EP 0 768 054 A1**
(43) Veröffentlichungstag der Anmeldung: **16.04.1997**
(21) Anmeldenummer: 95120636.6
(22) Anmeldetag: 28.12.1995
(51) Int. Cl.: A47J 27/14

(54) **Flexibel ausbaubare Kochanlage**

(30) Priorität: 16.10.1995 DE 29516359 U
(71) Anmelder: Muvero BV, NL-5800 AA Venray (NL)
(72) Erfinder: te Loo, Cornelis Hendrikus, NL-6093 ED Heythuysen (NL)
(74) Vertreter: Fritz, Edmund Lothar, Dipl.-Chem.

(57) **Zusammenfassung**

Die Erfindung betrifft eine Kochanlage für Anwendungen im Bereich von Großküchen, Gastronomie und dergleichen und umfaßt einen doppelwandigen Kochkessel, der im Zwischenraum zwischen der Außenwand und der Innenwand ein Heizmedium aufweist und eine Heizvorrichtung für die Erwärmung des Heizmediums, wobei der Aufnahmeraum für das Kochgut des doppelwandigen Kochkessels einen kreisrunden Umriß aufweist und die Kochanlage (10) ein im äußeren Umriß rechteckiges oder quadratisches Gehäuse aufweist, das den doppelwandigen Kochkessel, mit im Umriß kreisrunden Aufnahmeraum, aufnimmt. Es sind mehrere Größenvarianten mit unterschiedlich großem Volumen des Aufnahmeraums vorgesehen, bei denen jedoch die Außenabmessungen der Kochanlage (10) jeweils übereinstimmen. Die Erfindung liefert somit eine Kochanlage, die einen leichten, modulartigen und damit bedarfsgerechten Ausbau ermöglicht.

## Beschreibung

Die vorliegende Erfindung betrifft eine Kochanlage für Anwendungen im Bereich von Großküchen, Gastronomie und dergleichen.

Bekannt sind Kochanlagen für derartige Anwendungen, die einen doppelwandigen Kochkessel aufweisen, der im Zwischenraum zwischen der Außenwand und der Innenwand ein Heizmedium enthält, sowie eine Heizvorrichtung für die Erwärmung des Heizmediums, wobei die Innenwand und die Außenwand und damit der Aufnahmeraum für das Kochgut des doppelwandigen Kochkessels einen kreisrunden Umriß aufweist.

Diese zumeist aus Edelstahl oder eloxiertem Aluminium gelieferten Kochanlagen weisen jedoch vor allem den Nachteil auf, daß sie schlecht nebeneinander gestellt werden können. Dieses Problem wird noch dadurch vergrößert, wenn mehrere Kochanlagen mit unterschiedlichen Außenabmessungen, sprich unterschiedlich großen Kochkesseln, aneinander gestellt werden sollen. Der Erfindung liegt daher die Aufgabe zugrunde, eine Kochanlage zu entwickeln, die einen leichten, modulartigen und damit bedarfsgerechten Ausbau ermöglicht.

Diese Aufgabe wird erfindungsgemäß dadurch gelöst, daß die Kochanlage ein im äußeren Umriß rechteckiges oder quadratisches Gehäuse aufweist, das den doppelwandigen Kochkessel mit im Umriß kreisrunden Aufnahmeraum aufnimmt.

Für die Kochanlage sind dabei zweckmäßig mehrere Größenvarianten mit unterschiedlich großem Volumen des Aufnahmeraums vorgesehen, wobei unabhängig davon die Außenabmessungen der Kochanlage jeweils gleichbleiben. Dies hat zum einen den Vorteil für die Küchen oder für die Gastronomie, daß sie solche Typen der Kochanlagen anfordern können, deren Mengendurchsatz oder Fassungsvolumen ihrem Bedarf entspricht, andererseits wird so ein Aneinanderstellen mehrerer Kochanlagen, selbst wenn diese unterschiedliches Fassungsvermögen aufweisen, beträchtlich erleichtert. Durch die dann vorliegende geschlossene Form und nur wenige glatte Außenflächen wird darüber hinaus ein Reinigen der Kochanlagen vereinfacht.

Bei einer Montage mehrerer solcher Kochanlagen nebeneinander, das heißt also einer Reihenkonstruktion, werden die Kochanlagen zweckmäßig in einen Sockel eingebaut. Dies hat den Vorteil, daß mehrere solcher Kochanlagen sich gegeneinander nicht mehr verschieben können und auch der zwischen dem Boden der Kochanlagen und einem Fußboden verbleibende Zwischenraum abgedeckt wird, so daß dieser Bereich nicht mehr so leicht verdrecken kann.

Gemäß einer alternativen Variante weist das in etwa quadratische Gehäuse der Kochanlage am Boden vorzugsweise vier Fahrrollen auf, damit es selbst in gefülltem Zustand leicht an einen anderen Ort gerollt werden kann.

Der doppelwandige Kochkessel ist zudem an seiner dem rechteckigen oder quadratischen Gehäuse zugewandten Außenwand vorteilhaft mit einer Wärmeisolierung versehen, damit sich die Hitze des Heizmediums bzw. auch des Kochgutes nicht auf das Außengehäuse überträgt und zu Verbrennungen des Küchenpersonals führen kann und damit darüber hinaus ein energiesparender Betrieb der Kochanlage gewährleistet ist.

Es ist zweckmäßig, wenn das Gehäuse an mindestens einer Seite aus einem nichttragenden Abdeckblech besteht, welches abnehmbar ist. Damit kann der Blick auf wichtige Teile des Innern der Kochanlage oder Prozeßgrößen wie z.B. Füllstand des Heizmediums freigegeben werden und eine eventuell notwendige Reparatur der Kochanlage wird erheblich erleichtert.

Ferner weist die Kochanlage an mindestens zwei gegenüberliegenden Seiten des Gehäuses jeweils zweckmäßig eine oder mehrere Stützplatten auf, die senkrecht nach innen den doppelwandigen Kochkessel radial abstützen und somit dem Kochkessel im Gehäuse zusätzliche Stabilität verleihen.

Im folgenden wird die vorliegende Erfindung anhand eines Ausführungsbeispiels unter Bezugnahme auf die beiliegenden Zeichnungen näher beschrieben. Dabei zeigen
- Fig. 1: eine perspektivische Ansicht der Kochanlage in angedeuteter Reihenkonstruktion;
- Fig. 2: eine Draufsicht einer einzelnen Kochanlage mit einem Teilausbruch des Deckels;
- Fig. 3: eine Seitenansicht der Kochanlage gemäß dem Schnittverlauf in Fig. 2;
- Fig. 4: eine Draufsicht auf das Gehäuse der Kochanlage gemäß Fig. 3, aber ohne Einschubteil.
- Fig. 5: eine vergrößerte Darstellung der Verbindung der Gehäuseteile mittels Paßstiften gemäß Fig. 4

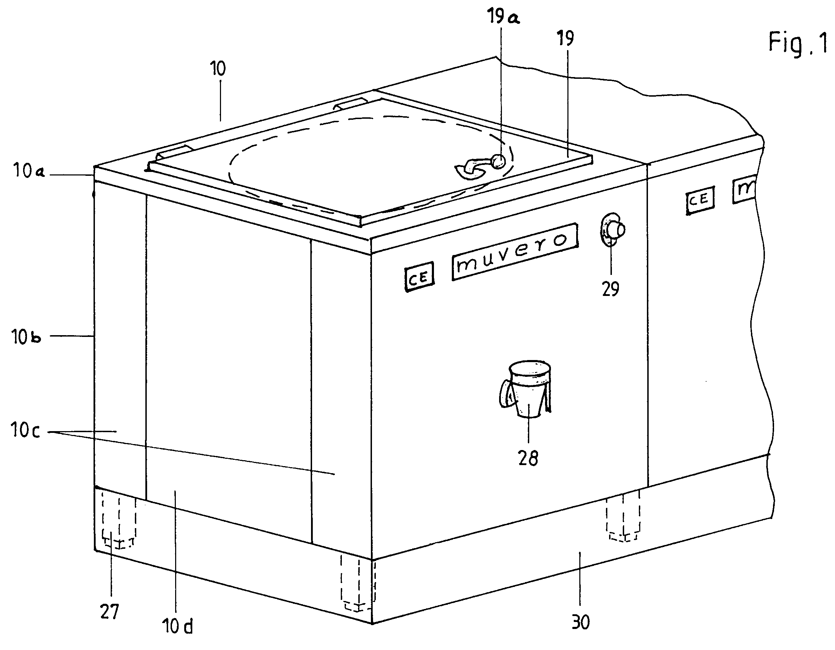

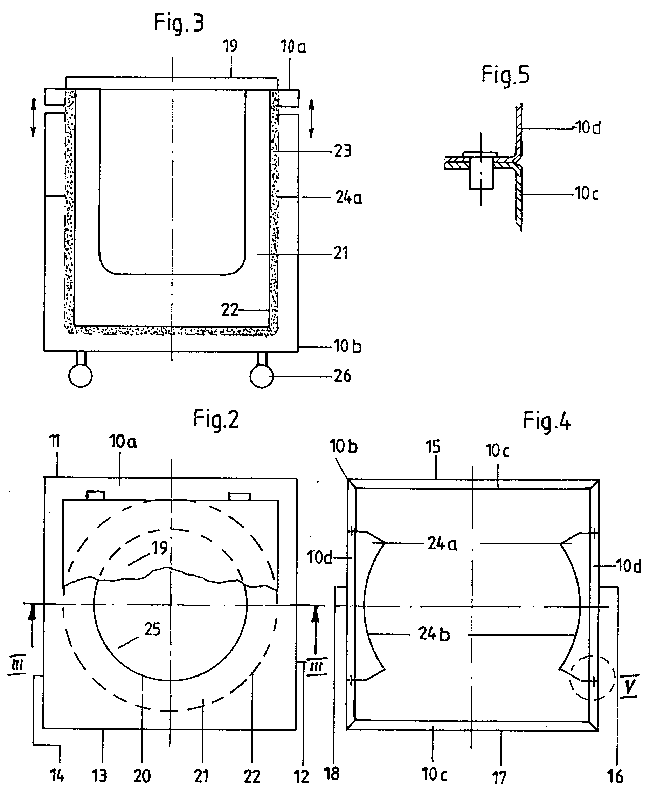

Zunächst wird auf Fig. 1 Bezug genommen. Sie zeigt die Kochanlage 10 insgesamt, die aus einem Einschubteil 10a besteht, welches mit seinen obenliegenden, äußeren Kanten in etwa quadratische Form aufweist und einem Gehäuse 10b welches in seinem äußeren Umfang ebenfalls quadratische Form aufweist. Das Einschubteil 10a ist vollständig von oben in das Gehäuse 10b hinabgelassen bzw. eingeschoben und liegt auf dessen tragenden Teilen 10d auf. Das Einschubteil 10a weist weiterhin oben aufliegend einen in seinem Grundriß ebenfalls etwa quadratischen Deckel 19 mit einem Deckelgriff 19a auf, so daß man nach Aufklappen des Deckels 19 mittels Deckelgriff 19a leicht an das Kochgut der Kochanlage gelangen kann. Weiterhin besteht das Gehäuse 10b an seiner Vorder- und seiner Rückseite aus je einem Abdeckblech 10c, welches im Querschnitt die Form eines zu einer Längsseite hin offenen Rechtecks aufweist. Diese Abdeckbleche sind abnehmbar und zwecks leichterer Demontage/Montage mittels paßstiften (vgl. Fig.5) oder dergleichen mit den tragenden Gehäuseteilen 10d verbunden. Somit kann die Sicht auf wichtige Anlagenteile oder Prozeßgrößen freigegeben werden, die anderenfalls von außen nicht sichtbar sind und eine Reparatur wird erheblich erleichtert. Etwa auf dem unteren Drittel des vorderen Abdeckblechs 10c des Gehäuses ist ein Ablaßhahn 28 angebracht, welcher zum Ablassen des Kochgutes aus der Kochanlage dient. Etwa in der rechten oberen Ecke des vorderen Abdeckblechs 10c ist ein Drehknopf für die Temperaturregelung des Kochgutes ersichtlich. In Fig. 1 ist ferner ein Stellsockel 30 erkennbar, der eine Reihenkonstruktion mehrerer Kochanlagen 10, das heißt also ein Nebeneinanderstellen mehrerer solcher Kochanlagen unterstützt. Mehrere solcher Kochanlagen werden dafür von oben auf den Stellsockel 30 gestellt, so daß vorhandene, höhenverstellbare Stellfüße 27 vollkommen von diesem überdeckt werden und die Kochanlagen 10 jeweils mit einer Außenseite an die direkt neben ihnen stehende Kochanlage angrenzen.

Fig. 2 zeigt das Einschubteil 10a von oben. Die oben liegenden äußeren Seitenflächen 11, 12, 13 und 14 bilden dabei in etwa einen quadratischen Grundriß. Bei geöffnetem Deckel 19 oder wie bei dem in Fig. 2 dargestellten Ausbruch, wird dabei die kreisrunde Innenwand 20 des Innenkochkessels sichtbar, die durch deren Tiefe hin zum Boden des Innenkochkessels den Aufnahmeraum 25 des Innenkochkessels für entsprechendes Kochgut bildet. Des weiteren ist die Außenwand 22 des doppelwandigen Innenkochkessels angedeutet, welche die Innenwand 20 des Innenkochkessels konzentrisch umgibt und mit dieser den Zwischenraum 21 zwischen Innen- und Außenwand des Innenkochkessels bildet.

Fig. 3 zeigt einen Prinzipschnitt der Kochanlage 10 von der Seite gemäß dem Schnittverlauf von Fig. 2. Zur Verdeutlichung des Prinzips ist das Einschubteil 10a noch nicht vollständig in das Gehäuse 10b eingeschoben und daher noch nicht auf diesem aufliegend. Es wird deutlich, wie einfach das Einschubteil von oben in das Gehäuse 10b herabgelassen oder auch aus diesem herausgezogen werden kann, unabhängig von einem gegebenenfalls veränderten Durchmesser der Innenwand 20 des Innenkochkessels respektive einem veränderten Durchmesser der Außenwand 22 des Innenkochkessels. Aus Fig. 3 wird besonders die Doppelwandigkeit des Innenkochkessels deutlich, die durch die Innenwand 20 des Innenkochkessels und die Außenwand 22 des Innenkochkessels gebildet wird. Der durch die Doppelwandigkeit erzeugte Zwischenraum 21 zwischen Innen- und Außenwand des Innenkochkessels dient dabei als Aufnahme für das Heizmedium, wobei als Heizmedium z.B. Glyzerin verwendet werden kann. Die Außenwand 22 des doppelwandigen Innenkochkessels ist dabei allseitig von einer Wärmeisolierung 23 umgeben, die zum einen energiesparend wirkt, zum anderen eine Erwärmung der Außenwände des Gehäuses 10b reduziert und damit Verbrennungen des Küchenpersonals vorbeugt. In Fig. 3 sind ferner Fahrrollen 26 abgebildet, die am Boden des Gehäuses 10b befestigt sind und alternativ zu den in Fig. 1 gezeigten Stellfüßen einsetzbar sind. Diese erleichtern vor allem bei einzeln betriebenen Kochanlagen den schnellen bedarfsweisen Transport zu einer anderen Stelle hin.

Fig. 4 zeigt das Gehäuse 10b der Kochanlage von oben, wobei das Einschubteil 10a vollkommen herausgenommen ist. Die Außenwände 15, 16, 17 und 18 des Gehäuses 10b bilden dabei im Umriß eine in etwa quadratische Form, wobei in eingeschobenem Zustand des Einschubteils 10a die Seitenflächen 11 bis 14 des Einschubteils mit den äußeren Seitenwänden 15 bis 18 des Gehäuses fluchten. Hierdurch wird eine eventuell geforderte und notwendige Reihenmontage mehrerer Kochanlagen 10 erleichtert. Des weiteren sind aus der Fig. 4 zwei Führungsplatten 24a ersichtlich, die sich, senkrecht von den tragenden Gehäuseteilen 10d ausgehend, nach innen in Richtung der Außenwand 22 des doppelwandigen Kochkessels erstrecken und deren bogenförmige Kontaktflächen 24b ungefähr dem Radius der Außenwand 22 des doppelwandigen Innenkochkessels entsprechen. Der Innenkochkessel wird durch diese Führungsplatten zentriert und radial stabilisiert. Dies ist vor allem bei gefülltem Kessel sinnvoll, wenn dieser zudem auch noch bewegt werden soll.

## Patentansprüche

1. Kochanlage für Anwendungen im Bereich von Großküchen, Gastronomie und dergleichen umfassend einen doppelwandigen Kochkessel, der im Zwischenraum zwischen der Außenwand und der Innenwand ein Heizmedium aufweist und eine Heizvorrichtung für die Erwärmung des Heizmediums, wobei der Aufnahmeraum für das Kochgut des doppelwandigen Kochkessels einen kreisrunden Umriß aufweist, dadurch gekennzeichnet, daß die Kochanlage (10) ein im äußeren Umriß rechteckiges oder quadratisches Gehäuse aufweist, das den doppelwandigen Kochkessel mit im Umriß kreisrunden Aufnahmeraum (25) aufnimmt.

2. Kochanlage nach Anspruch 1, dadurch gekennzeichnet, daß mehrere Größenvarianten mit unterschiedlich großem Volumen des Aufnahmeraums (25) vorgesehen sind, bei denen jedoch die Außenabmessungen der Kochanlage (10) jeweils übereinstimmen.

3. Kochanlage nach Anspruch 1 oder 2 dadurch gekennzeichnet, daß diese mehrere nebeneinander in einer Reihe angeordnete und in einen Stellsockel (30) einbaubare rechteckige oder quadratische Einzelgehäuse mit jeweils einem beheizbaren doppelwandigen Kochkessel umfaßt.

4. Kochanlage nach einem der Ansprüche 1 oder 2, dadurch gekennzeichnet, daß diese ein einzelnes rechteckiges oder quadratisches Außengehäuse mit einem doppelwandigen Kochkessel umfaßt, wobei das Gehäuse an der Unterseite Fahrrollen (26) aufweist und fahrbar ist.

5. Kochanlage nach einem der Ansprüche 1 bis 4, dadurch gekennzeichnet, daß der doppelwandige Kochkessel an seiner dem Gehäuse zugewandten Außenwand (22) mit einer Wärmeisolierung (23) versehen ist.

6. Kochanlage nach einem der Ansprüche 1 bis 5, dadurch gekennzeichnet, daß das Gehäuse (10b) an mindestens einer Seite aus einem nichttragenden Abdeckblech (10c) besteht, welches abnehmbar ist.

7. Kochanlage nach einem der Ansprüche 1 bis 6, dadurch gekennzeichnet, daß an mindestens zwei gegenüberliegenden Seiten des Gehäuses jeweils eine oder mehrere Stützplatten (24a) vorgesehen sind, die senkrecht nach innen zur Außenwand (22) des doppelwandigen Kochkessels stehen.
